# EUROPÄISCHE PATENTSCHRIFT

(11) **EP 2 751 451 B1**
(45) Veröffentlichungstag und Bekanntmachung des Hinweises auf die Patenterteilung: **29.07.2015**
(21) Anmeldenummer: 12717125.4
(22) Anmeldetag: 25.04.2012
(51) Int. Cl.: F16J 15/06, F16J 15/10, F02F 7/00

(54) **PROFILDICHTUNG MIT RANDABDICHTUNG**
PROFILED SEAL WITH EDGE SEAL
GARNITURE D'ÉTANCHÉITÉ PROFILÉE PRÉSENTANT UNE SECTION D'ÉTANCHÉITÉ EN BORDURE

(30) Priorität: 01.09.2011 DE 102011081973
(43) Veröffentlichungstag der Anmeldung: 09.07.2014
(73) Patentinhaber: Federal-Mogul Sealing Systems GmbH, 57562 Herdorf (DE)
(72) Erfinder: GASCH, Martin, 40723 Hilden (DE); SALAMEH, Ralf, 75053 Gondelsheim (DE)
(74) Vertreter: Becker Kurig Straus
(86) Internationale Anmeldenummer: PCT/EP2012/057520
(87) Internationale Veröffentlichungsnummer: WO 2013/029811

(56) Entgegenhaltungen:
- EP-A1- 2 123 950
- DE-A1- 19 519 888
- US-A1- 2009 173 310

## Beschreibung

Die vorliegende Erfindung betrifft eine Profildichtung zur Abdichtung eines oberen und unteren Teils eines Gehäuses für Flüssigkeiten. Insbesondere betrifft sie eine Pröfildichtüng mit einer inneren Abdichtung und einer zusätzlichen Randabdichtung. Optional weist die Dichtung eine Abtropflippe auf. Die erfindungsgemäße Dichtung stellt eine verbesserte Abdichtwirkung bereit, insbesondere auch gegen das Eindringen von Schmutz, Feuchtigkeit und dergleichen von außen. Weiterhin kann die erfindungsgemäße Dichtung das Auftreten von scheinbaren Undichtigkeiten verhindern.

Bei der Abdichtung zweier Gehäusehälften eines mit Flüssigkeit befüllbaren Behälters, etwa im Bereich des Getriebegehäuses, der Ölwanne oder Zylinderkopfhaube eines Fahrzeugmotors werden vorzugsweise elastische Dichtungen wie Elastomerdichtungen zur Abdichtung verwendet. Solche Dichtungen besitzen mehrere Funktionen. Zum Einen soll das Austreten von Flüssigkeiten wie Ölen, Kühlflüssigkeiten etc. nach außen verhindert werden, um Verluste von Betriebsflüssigkeiten und die Verschmutzung der Umwelt zu vermeiden. Gleichzeitig soll das Eindringen von Schmutz, Feuchtigkeit etc. von außen ausgeschlossen werden, um eine Verunreinigung und/oder Verdünnung der Betriebsflüssigkeiten zu verhindern.

EP 2 123 950 A1 zeigt eine bekannte Dischtung. Dieses Dokument offenbart eine Dichtung zur Abdichtung einer oberen und einer unteren Hälfte eines Gehäuses für Flüssigkeiten gegeneinander, umfassend
einen umlaufenden inneren Dichtabschnitt, der im eingebauten Zustand der Dichtung dichtend an der oberen und der unteren Gehäusehälften anliegt,
einen umlaufenden äußeren Dichtabschnitt, der im eingebauten Zustand der Dichtung dichtend an der oberen und der unteren Gehäusehälfte anliegt, und
einen Verbindungssteg zwischen dem inneren und dem äußeren Dichtabschnitt.

Weiterhin dient die Dichtung aufgrund der elastischen Eigenschaften des Elastomers dazu, den Spalt ausgleichen, der zwischen zu verbindenden bzw. gegeneinander abzudichtenden Bauteilen auftreten kann. Ein solcher Spalt kann bewusst in Kauf genommen bzw. durch das Design vorgegeben werden, er kann sich aber auch durch häufig unvermeidbare Fertigungstoleranzen, bei einem Montagevorgang oder durch eine Verformung aufgrund von thermischen, mechanischen oder anderen Einflüssen während des Betriebs in dem Behälter,

Deckel oder der Wanne dynamisch bilden.

Bei derartigen Gehäusen ist praktisch nicht zu vermeiden, dass zwischen den zu verbindenden und abzudichtenden Gehäusehälften auf der Außenseite ein kleiner Dichtspalt verbleibt, der keilfönnig von der Außenseite bis zu der Stelle reicht, an der die Dichtung dichtend an den Dichtflächen der Gehäusehälften anliegt. In diesen Spalt kann, auch unterstützt durch Kapillarwirkung, Flüssigkeit von außen eindringen, häufig vermischt mit Schmutz, und sich in dem Spalt umlaufend verteilen.

Bei einer rein äußerlichen Überprüfung kann dabei leicht der Eindruck entstehen, dass das abzudichtende Medium wie etwa Öl ausgetreten sei. Obwohl die Dichtung ihre Dichtfunktion weiterhin zuverlässig erfüllt, erscheint die Dichtung undicht und somit defekt zu sein. Ohne substantielle Überprüfung des Gehäuses kann eine solche auch Scheinundichtigkeit genannte Situation nicht von einer wirklichen Leckage des Gehäuses unterschieden werden.

Ein ähnliches Problem kann auftreten, wenn ein mit Flüssigkeit gefüllter Behälter wie etwa eine Ölwanne über eine Befülleinrichtung oder Öffnung mit der entsprechenden Flüssigkeit erstmalig oder erneut befüllt werden soll. Je nach Lage und Konstruktion der Befülleinrichtung wie etwa dem Öleinfüllstutzen kann leicht Öl auf die Außenseite des Behälters gelangen. Ebenfalls kann im normalen Betrieb der betreffenden Maschine von außen Flüssigkeit auf das Gehäuse gelangen. Diese wird dann häufig unter dem Einfluss der Schwerkraft, unterstützt durch Kriechfähigkeit und Kapillarwirkung, in den Dichtspalt gelangen. Auch hierbei wird der Eindruck entsteht, dass eine Leckage vorliegt, obwohl die Dichtung noch einwandfrei abdichtet.

In Folge einer derartigen scheinbaren Undichtigkeit wird häufig versucht, die Flüssigkeit aus dem Dichtspalt zu entfernen, entweder zur bloßen Reinigung der Außenseite des Behälters oder um im späteren Betrieb der zugehörigen Maschine echte Undichtigkeiten erkennen zu können. Das Reinigen kann aufwendig, zeitraubend und kostspielig sein. Auch kann, zum Beispiel bei Verwendung eines Hochdruckstrahls oder Dampfreinigers, die Dichtung dabei geschädigt werden, so dass erst eine tatsächliche Undichtigkeit auftritt, die aufgrund der vordergründigen Sauberkeit unmittelbar nach der Reinigung erst später bemerkt werden würde.

Das Problem der Scheinundichtigkeit kann auch auftreten, wenn ein bereits gefüllter Behälter, der fest miteinander verbundene und gegeneinander abgedichtete Bauteile aufweist, etwa im Zuge einer Wartungsmaßnahme demontiert wird. Während einer solchen Demontage können kleine Mengen der betreffenden Flüssigkeit in eine Dichtungsnut sowie in einen angrenzenden Flanschbereich des Behälters gelangen. Zwar werden nach erfolgter Wartung für gewöhnlich die Bauteile gereinigt. Während der anschließenden erneuten Montage der Bauteile werden diese aber mit der Dichtung zusammen unter Druck miteinander verbunden, so dass vorhandene Restmengen der Flüssigkeit aus der Dichtungsnut nach außen gepresst werden. Auch hier kann der Eindruck einer undichten Dichtung entstehen, was unnötige oder sogar schädliche Reinigungsversuche bis hin zur erneuten Demontage/Montage nach sich ziehen kann.

Demgegenüber soll die vorliegende Erfindung eine Dichtung bereitstellen, die eine verbesserte Abdichtung gegenüber Flüssigkeiten sowohl von innen als auch von außen aufweist. Ferner soll die erfindungsgemäße Dichtung es ermöglichen, dass Scheinundichtigkeiten verhindert oder zumindest als solche erkannt werden können. Von außen auf das Gehäuse treffende Flüssigkeiten sollen möglichst davon abgehalten werden, in den Dichtspalt zu gelangen.

Zusätzlich kann durch solch eine Dichtung eine elektrochemische Kontaktkorrosion zwischen den beiden Dichtpartnern vermieden werden. Häufig bestehen die Dichtpartner aus unterschiedlichen Materialien, zB. Aluminium und Magnesium. Diese beiden Metalle weisen ein unterschiedliche hohes elektrochemisches Potential auf. Falls sich ein elektrisch leitendes Fluid (zB. Wassertropfen) in dem nicht komplett geschlossenen umlaufenden Dichtspalt befindet oder hineinziehen kann, kann es zur Korrosion (galvanisches Element) kommen und das unedlere Metall zerstören (in diesem Fall Magnesium), was zu einer Undichtigkeit führen kann.

Zur Lösung der Aufgaben wird eine Dichtung zur Abdichtung einer oberen und einer unteren Hälfte eines Gehäuses für Flüssigkeiten gegeneinander nach den Merkmalen des Ansupruchs 1 bereitgestellt.

Die erfindungsgemäße Dichtung bildet somit mindestens zwei Funktionsbereiche. Im ersten Bereich wird eine innere erste Dichtlinie gegenüber der in dem Gehäuse befindlichen Flüssigkeit hergestellt. Im zweiten Bereich wird eine zusätzliche äußere Dichtlinie aufgebaut, die sowohl gegenüber der Außenseite abdichtet, als auch zwischen die beiden Dichtlinien gelangte Flüssigkeit am Austreten hindert.

Gemäß einer Ausführungsform weist der äußere Dichtabschnitt mindestens zwei Rillen oder Rippen auf. Dies schließt sowohl zwei gleiche Rillen bzw. Rippen ein, aber ebenso, dass eine Rille und eine Rippe vorgesehen sein können.

Gemäß einer Ausführungsform sind mindestens zwei Rillen oder Rippen der gleichen oder verschiedenen Gehäusehälften zugewandt. Beispielsweise können zwei Rillen oder Rippen der gleichen Gehäusehälfte zugewandt sein, ebenso können aber auch eine Rille der einen und eine Rippe der anderen Gehäusehälfte zugewandt sein. Alternativ können eine Rille und eine Rippe der gleichen Gehäusehälfte zugewandt sein, oder zwei gleiche Rillen oder Rippen verschiedenen Gehäusehälften zugewandt sein.

Erfindungsgemäß umfasst die Dichtung weiter eine Abtropflippe, die im eingebauten Zustand der Dichtung radial über den Außenrand der unteren Gehäusehälfte hinausragt.

Damit wird ein dritter Funktionsbereich bereitgestellt. Der dritte Bereich liegt bereits radial außerhalb des Außenrandes des Gehäuses, und dient dazu, auf die Außenseite des Gehäuses gelangende Flüssigkeit abtropfen zu lassen, so dass diese nicht in den Dichtspalt eintreten kann.

Erfindungsgemäß ist der untere Rand der Abtropflippe zumindest im Einbauzustand der Dichtung gleich hoch oder niedriger angeordnet ist als die äußere Dichtfläche der unteren Gehäusehälfte.

Erfindungsgemäß erstreckt sich zumindest der äußere Teil der Abtropflippe nach unten.

Gemäß einer Ausführungsform besteht zumindest die innere und äußere Dichtlippe aus Elastomer. Der Verbindungssteg sowie die Abtropflippe, die keine Dichtfunktionen erfüllen, können prinzipiell auch aus anderen Materialien, wie beispielsweise Kunststoff oder Metall bestehen. Alternativ kann die gesamte Dichtung einstückig aus Elastomer bestehen.

Gemäß einer Ausführungsform ist die Oberseite der Abtropflippe stetig nach unten geneigt. Dadurch wird zuverlässig auf die obere Gehäusehälfte treffende Flüssigkeit unter Einwirkung der Schwerkraft nach unten geleitet, wo es schließlich von der Abtropflippe abtropfen kann. Dabei kann es je nach Einbaulage der Wanne erforderlich sein, dass die Abtropflippe nicht in allen Bereichen im gleichen Winkel zur restlichen Dichtung steht, damit die Flüssigkeit unter Schwerkraft nach unten abtropft. Ggf. kann es auch notwendig sein, die Abtropflippe etwas den Strömungsverhältnissen am Motor anzupassen, damit der Luftstrom im Fahrbetrieb das Abtropfen unterstützt.

Gemäß einer Ausführungsform liegt der Steg im eingebauten Zustand der Dichtung nicht an der oberen und unteren Gehäusehälfte an. Dadurch wird einerseits die Beweglichkeit und Anpassungsfähigkeit der Dichtabschnitte erhöht, und andererseits ein Aufnahmeraum für Flüssigkeiten geschaffen, die durch den äußeren oder inneren Dichtabschnitt hindurchgelangen.

Gemäß einer Ausführungsform weist der innere Dichtabschnitt eine oder mehrere Dichtlippen auf. Jede der Dichtzonen kann individuell als einfache oder auch als mehrfache Dichtlippe ausgebildet werden. Dadurch werden die Dichtigkeit und die Anpassungsfähigkeit an die Dichtflächen verbessert.

Die Gehäusehälften können beispielsweise Hälften eines Getriebegehäuses, einer Ölwanne oder dergleichen sind. Die Dichtung kann eine Elastomer- oder Gummi-Dichtung sein. Die Dichtung kann z.B. aus einem reinen elastomeren Werkstoff wie z.B ACM, AEM, FPM, EPDM, etc.... oder auch z.B. aus einem TPE (Thermoplastisches Elastomer) gebildet sein bzw. bestehen.

Die vorliegende Erfindung soll im Folgenden detaillierter beschrieben werden, unter Bezugnahmen auf die Zeichnung, in der
- Fig. 1: eine erste Ausführungsform einer nicht erfindungsgemäßen Dichtung im Querschnitt zeigt;
- Fig. 2: eine alternative Ausführungsform der nicht erfindungsgemäßen Dichtung mit Abtropflippe im Querschnitt zeigt;
- Fig. 3: eine erste Ausführungsform der erfindungsgemäßen Dichtung mit einer Abtropflippe und einem Abtropfrand im Querschnitt zeigt; und

Fig. 4 die erste Dichtung von Fig. 1 im eingebauten Zustand im Querschnitt zeigt. In Fig. 1 ist eine erste Ausfuhrungsform einer Dichtung gezeigt. Die Dichtung 1 ist für den Einbau zwischen einem ersten (oberen) Gehäuseteil 2 und einem zweiten (unteren) Gehäuseteil 3 eines Gehäuses für Flüssigkeiten vorgesehen. Es wird angemerkt, dass hier und in den weiteren Figuren lediglich ein Querschnitt des Flanschbereichs des Gehäuses bzw. der entsprechenden Gehäuseteile gezeigt ist.

Die Dichtung 1 umfasst einen umlaufenden inneren Dichtabschnitt 4, der im Einbauzustand eine innere Abdichtlinie bildet. Die Dichtung umfasst weiter einen umlaufenden äußeren Dichtabschnitt 5, der im Einbauzustand eine zusätzliche äußere Abdichtlinie bildet. Der Dichtabschnitt 5 weist in der hier gezeigten Ausführungsform eine Rille 6 auf, die der unteren Gehäusehälfte zugewandt ist. Diese Rille 6 ist vorgesehen, um im Einbauzustand eine im Wesentlichen komplementär geformte Rippe 7 im äußeren Dichtflächenbereich der unteren Gehäusehälfte 3 aufzunehmen.

Durch das System Rille/Rippe wird die Gesamtfläche an dichtend miteinander in Kontakt stehenden Dichtflächen gegenüber herkömmlichen flach ausgestalteten Dichtungen vergrößert. Dadurch kann die Dichtigkeit verbessert werden. Auch wird einem seitlichen Verrutschen der Dichtung entgegengewirkt.

Die Dichtung 1 weist weiterhin einen Verbindungssteg 8 auf, der den inneren Dichtabschnitt 4 und den äußeren Dichtabschnitt 5 miteinander verbindet. Je nach Ausführungsform kann der Verbindungssteg zwischen innerem und äußerem Dichtabschnitt geschlossen ausgebildet sein, oder alternativ auch mit Unterbrechungen. Derartige Unterbrechungen können dazu dienen, die Verbindung von innerem und äußerem Dichtabschnitt flexibler zu machen, um die Anpassungsfähigkeit der Dichtung zu erhöhen. Sie können aber auch oder zusätzlich dazu dienen, einer zwischen die Dichtabschnitte gelangenden Flüssigkeit einen Speicherraum zu schaffen, um ein endgültiges Austreten zu verhindern oder zumindest zu verlangsamen.

In der hier gezeigten speziellen Ausführungsform weist der innere Dichtabschnitt 4 an seinem oberen und unteren Anlagebereich für die Gehäusehälften 2, 3 jeweils zwei Dichtrippen 9 auf. Außerdem weist der Dichtabschnitt 4 zwei seitliche Ausbuchtungen bzw. Verdickungen 10 auf. Deren Funktion wird im Folgenden weiter beschrieben werden.

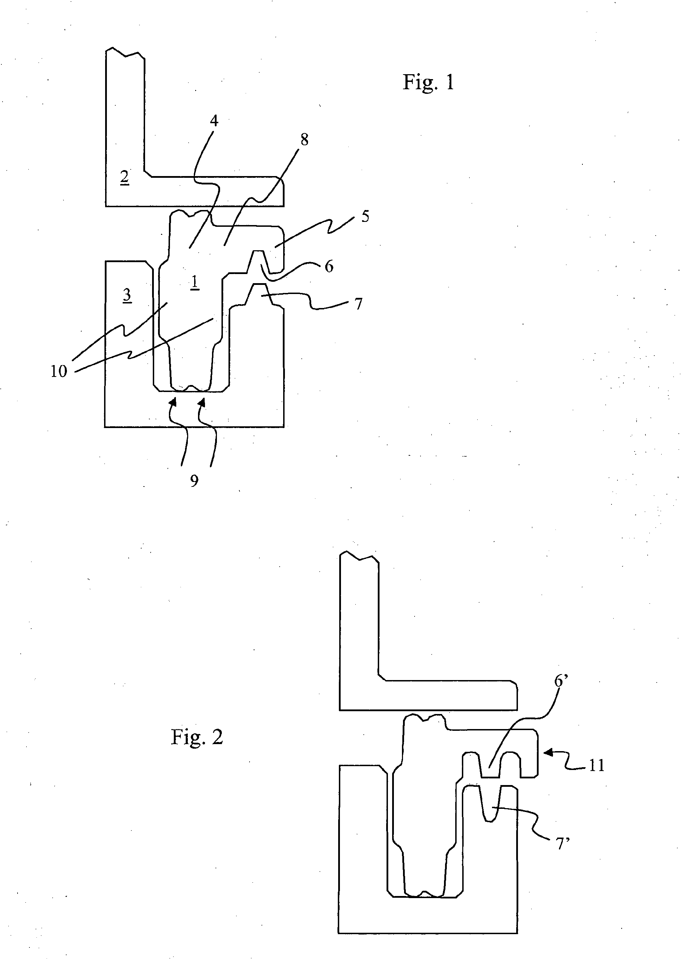

Fig. 2 zeigt eine alternative Ausführungsform der Dichtung. Abweichend von der Ausführungsform von Fig. 1 ist der äußere Dichtabschnitt 5 nicht mit einer Rille, sondern mit einer Rippe 6' versehen, die in eine entsprechend komplementär ausgebildete Rille 7' in der unteren Gehäusehälfte 3 eingreift, wenn die Dichtung 1 eingebaut wird. Weiterhin weist die Dichtung 1 in der hier gezeigten Ausführungsform eine Abtropflippe 11 auf, die in Form eine radial über den Außenrand der unteren Gehäusehälfte 3 hinausragt. Durch diesen Überstand 11 wird erreicht, dass am Gehäuse herunterlaufende Flüssigkeit wie etwa Öl abtropfen kann. Ein Hineinziehen der Flüssigkeit, was zur vorstehend beschriebenen Scheinundichtigkeit führen kann, wird so vermindert oder ganz verhindert. Dies kann noch verbessert werden, indem dieser überstehende Teil 11 der Dichtung so ausgestaltet wird, dass er im Einbauzustand zumindest im unteren Bereich nicht an der unteren Gehäusehälfte 3 anliegt.

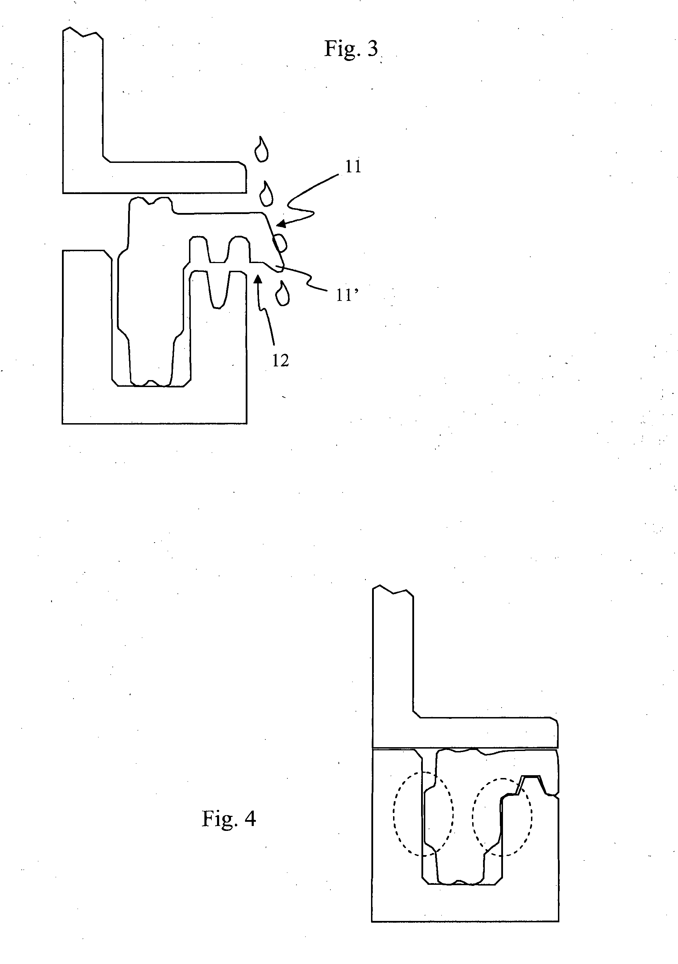

In Fig. 3 ist eine erfindungsgemäße Ausführungsform gezeigt, die eine Weiterbildung der Ausführungsform von Fig. 2 darstellt. Hier ist die Abtropflippe 11 zusätzlich mit einer außen abgeschrägten Form sowie einem ausgeprägten Abtropfrand 11' versehen. Da dieser Abtropfrand 11' von der Außenseite der unteren Gehäusehälfte 3 entfernt ist, wird herunterlaufende Flüssigkeit dort abtropfen. Außerdem wird so leichter erkennbar, dass es sich um von außen auf die Dichtung gelangte Flüssigkeit handelt, und nicht um einen Flüssigkeitsaustritt aufgrund einer Undichtigkeit, da der untere Bereich 12 zwischen Abtropfrand 11' und Gehäuseaußenseite von der Flüssigkeit nicht bedeckt wird.

In Fig. 4 ist eine nicht erfindungsgemäße Dichtung in der Ausführungsfonn von Fig. 1 im Einbauzustand gezeigt. Der innere Dichtabschnitt 4 liegt mit seinen je zwei Dichtlippen dichtend an der oberen Gehäusehälfte 2 und der unteren Gehäusehälfte 3 an. Der äußere Dichtabschnitt 5 liegt ebenfalls dichtend an der oberen Gehäusehälfte 2 und der unteren Gehäusehälfte 3 an, außerdem ist die Rippe 7 der unteren Gehäusehälfte 3 dichtend in der Rille 6 des äußeren Dichtabschnitts 5 aufgenommen.
Weiterhin ist hier zu erkennen, dass die Verdickungen 10 durch die elastische Verformung bzw. das Fließen von Material der Dichtung 1, das beispielsweise ein Elastomer sein kann, sich seitlich ausgedehnt haben. Dies kann bei entsprechender Dimensionierung der Verdickungen 10 genutzt werden, um zusätzliche Dichtlinien zu bilden, wenn die Ausdehnung ausreichend ist, um seitlich dichtend an den entsprechenden Oberflächen der unteren Gehäusehälfte 3 anzuliegen (durch gestrichelte Ovale hervorgehoben).

Die vorstehenden Ausführungsformen sind lediglich als Ausführungsbeispiele zum besseren Verständnis der Erfindung gedacht, ohne diese auf die konkreten Ausführungsformen einzuschränken. Kombinationen von Merkmalen sind gemäß der Erfindung möglich. Beispielsweise ist die Zahl der Rippen / Rillen in Dichtung bzw. Gehäusehälfte variabel. Auch ist es möglich, dass die Dichtung auf beiden Seiten des äußeren Dichtabschnitts Rillen und/oder Rippen aufweist, sowie beide Gehäusehälften dazu jeweils komplementäre Rippen und/oder Rillen aufweisen. Eine Seite des äußeren Dichtabschnitts kann sowohl mehrere gleichartige Rillen oder Rippen aufweisen, als auch sowohl eine oder mehrere Rillen und eine oder mehrere Rippen. Dies gilt analog für die Gehäusehälfte(n).

Zum Material wird folgendes ausgeführt. Die Dichtung kann z.B. aus einem reinen elastomeren Werkstoff wie z.B ACM, AEM, FPM, EPDM, NBR, HNBR etc.... oder auch z.B. aus einem TPE (Thermoplastisches Elastomer) bestehen. Es sind auch Kombinationen denkbar. Das Merkmal der Abtropflippe, das an der eigentlichen Dichtung nach außen hin angebracht ist, kann auch mit anderen Dichtungstypen kombiniert werden, und zwar auch mit Dichtungen, die Träger beinhalten oder andere Bauformen von Dichtungen. Die Erfindung ist nicht auf die I-Profildichtungen beschränkt, auch wenn das im Beispiel so gezeigt ist. Die Haltenoppen sind an der Dichtung lokal in regelmäßigen Abständen beidseitig angebracht und sind etwas breiter als die Nut. Sie sichern nach dem Eindrücken der Dichtung in die Nut, so dass diese nicht wieder herausfällt.

In einer Ausführungsform nimmt die Nut Haltenoppen (im Gehäuse) auf, in einer alternativen Ausführungsform befinden sich die Noppen in der Dichtung und werden im Gehäuse aufgenommen.

## Patentansprüche

1. Dichtung (1) zur Abdichtung einer oberen (2) und einer unteren Hälfte (3) eines Gehäuses für Flüssigkeiten gegeneinander, umfassend:
- einen umlaufenden inneren Dichtabschnitt (4), der im eingebauten Zustand der Dichtung (1) dichtend an der oberen (2) und der unteren Gehäusehälfte (3) anliegt;
- einen umlaufenden äußeren Dichtabschnitt (5), der im eingebauten Zustand der Dichtung (1) dichtend an der oberen (2) und der unteren Gehäusehälfte (3) anliegt, und wobei der äußere Dichtabschnitt (5) aufweist:
mindestens eine Rille (6), die einer Gehäusehälfte zugewandt ist, wobei die Rille (6) im eingebauten Zustand der Dichtung (1) eine dazu komplementäre Rippe (7) dieser Gehäusehälfte aufnimmt;
oder
mindestens eine Rippe (6'), die einer Gehäusehälfte zugewandt ist, wobei die Rippe (6') im eingebauten Zustand der Dichtung (1) in einer dazu komplementären Rille (7') dieser Gehäusehälfte aufgenommen ist;
- einen Verbindungssteg (8) zwischen dem inneren (4) und dem äußeren (5) Dichtabschnitts; und
- eine Abtropflippe (11), die im eingebauten Zustand der Dichtung (1) radial über den Außenrand der im eingebauten Zustand unteren Gehäusehälfte (3) hinausragt, wobei die Abtropflippe (11) einen Abtropfrand (11') aufweist, der sich nach unten erstreckt und durch einen Bereich (12) von der Außenseite der unteren Gehäusehälfte (3) entfernt ist, wobei der untere Rand des Abtropfrands (11') im Einbauzustand der Dichtung (1) niedriger angeordnet ist als die äußere Dichtfläche der unteren Gehäusehälfte (3) und der Bereich (12) zwischen dem Abtropfrand (11') und der Außenseite der unteren Gehäusehälfte (3).

2. Dichtung nach Anspruch 1, wobei der äußere Dichtabschnitt mindestens zwei Rillen oder Rippen aufweist.

3. Dichtung nach Anspruch 2, wobei die mindestens zwei Rillen oder Rippen der gleichen oder verschiedenen Gehäusehälften zugewandt sind.

4. Dichtung nach einem der vorherigen Ansprüche, wobei zumindest der innere und der äußere Dichtabschnitt aus Elastomer bestehen.

5. Dichtung nach einem der vorherigen Ansprüche, wobei die Dichtung einstückig aus Elastomer besteht.

6. Dichtung nach einem der vorherigen Ansprüche, wobei die Oberseite der Abtropflippe stetig nach unten geneigt ist.

7. Dichtung nach einem der vorherigen Ansprüche, wobei der Steg im eingebauten Zustand der Dichtung nicht an der oberen und unteren Gehäusehälfte anliegt.

8. Dichtung nach einem der vorherigen Ansprüche, wobei der innere Dichtabschnitt eine oder mehrere Dichtlippen aufweist.

## Claims

1. Gasket (1) for sealing an upper (2) and a lower half (3) of a housing for liquids with respect to each other, comprising:
- a circumferential inner sealing section (4) which in installed position of the gasket (1) abuts in a sealing manner on the upper (2) and the lower housing half (3):
- a circumferential outer sealing section (5) which in installed position of the gasket (1) abuts in a sealing manner on the upper (2) and the lower housing half (3), and wherein the outer sealing section (5) comprises:
at least one groove (6) facing one housing half, wherein the groove (6) receives a complementary rib (7) of this housing half in installed position of the gasket (1),
or
at least one rib (6') facing one housing half, wherein the rib (6') is received in a complementary groove (7') of this housing half in installed position of the gasket (1);
- a connecting web (8) between the inner (4) and the outer (5) sealing section; and
- a dripping lip (11) which in installed position of the gasket (1) protrudes radially past the outer edge of the housing half (3) which in installed position is the lower one, wherein the dripping lip (11) comprises a dripping edge (11) extending downwards and is spaced from the outer side of the lower housing half (3) by an area (12), wherein the lower edge of the dripping edge (11') in installed position of the gasket (1) is located lower than the outer sealing surface of the lower housing half (3) and the area (12) between the dripping edge (11') and the outer side of the lower housing half (3).

2. Gasket according to claim 1, wherein the outer sealing section comprises at least two grooves or ribs.

3. Gasket according to claim 2, wherein the at least two grooves or ribs are facing the same or different housing halves.

4. Gasket according to one of the preceding claims, wherein at least the inner and the outer sealing section consist of elastomeric material.

5. Gasket according to one of the preceding claims, wherein the gasket consists integrally of elastomeric Material.

6. Gasket according to one of the preceding claims, wherein the top side of the dripping lip is steadily inclined downwards.

7. Gasket according to one of the preceding claims, wherein the web does not abut on the upper and lower housing half in installed position of the gasket.

8. Gasket according to one of the preceding claims, wherein the inner sealing section comprises one or more sealing lips.

## Revendications

1. Joint d'étanchéité (1) pour isoler de manière étanche l'une contre l'autre une moitié supérieure (2) et une moitié inférieure (3) d'un logement pour liquides, comprenait :
- une portion de joint d'étanchéité intérieure circonférentielle (4), qui en l'état monté du joint d'étanchéité (1) vient reposer de manière étanche sur la moitié de logement supérieure (2) et la moitié de logement inférieure (3) ;
- une portion de joint d'étanchéité extérieure circonférentielle (5), qui en l'état monté du joint d'étanchéité (1) vient reposer de manière étanche sur la moitié de logement supérieure (2) et la moitié de logement inférieure (3), et dans lequel la portion de joint d'étanchéité extérieure (5) présente :
au moins une rainure (6), qui est tournée vers une moitié de logement, dans lequel la rainure (6) en l'état monté du joint d'étanchéité (1) renferme une nervure (7) complémentaire à celle-ci de cette moitié de logement ;
ou
au moins une nervure (6'), qui est tournée vers une moitié de logement, dans lequel la nervure (6') en l'état monté du joint d'étanchéité (1) est renfermée dans une rainure (7') complémentaire à celle-ci de cette moitié de logement ; et
- un gradin de liaison (8) entre la portion de joint d'étanchéité intérieure (4) et extérieure (5) ; et
- une lèvre d'égouttage (11), qui en l'état monté du joint d'étanchéité (1) dépasse radialement par-dessus le bord extérieure de la moitié de logement inférieure (3) en l'état monté, dans lequel la lèvre d'égouttage (11) présente un bord d'égouttage (11'), qui s'étend vers le bas et est éloignée du côté extérieur de la moitié de logement inférieure (3) par une zone (12), dans lequel le bord inférieur de la lèvre d'égouttage (11') en l'état monté du joint d'étanchéité (1) est disposé en étant plus petit que la surface d'étanchéité extérieure de la moitié de logement inférieure (3) et la zone (12) entre le bord d'égouttage (11') et le côté extérieur de la moitié de logement inférieure (3).

2. Joint d'étanchéité selon la revendication 1, dans lequel la portion de joint d'étanchéité extérieure présente au moins deux rainures ou nervures.

3. Joint d'étanchéité selon la revendication 2, dans lequel au moins deux rainures ou nervures sont tournées vers les moitiés de logement identiques ou différentes.

4. Joint d'étanchéité selon une des revendications précédentes, dans lequel au moins à portion de joint d'étanchéité intérieure et la portion de joint d'étanchéité extérieur sont constituées d'élastomère.

5. Joint d'étanchéité selon une des revendications précédentes, dans lequel le joint d'étanchéité est constitué d'élastomère en un seul tenant.

6. Joint d'étanchéité selon une des revendications précédentes, dans lequel le côté supérieur de la lèvre d'égouttage est incliné en continu vers le bas.

7. Joint d'étanchéité selon une des revendications précédentes, dans lequel le gradin en l'état monté du joint d'étanchéité ne vient pas reposer sur la moitié de logement supérieure et la moitié de logement inférieure.

8. Joint d'étanchéité selon une des revendications précédentes, dans lequel la portion de joint d'étanchéité intérieure présente une ou plusieurs lèvres d'étanchéité.
